# EUROPÄISCHE PATENTSCHRIFT

(11) **EP 3 908 425 B1**
(45) Veröffentlichungstag und Bekanntmachung des Hinweises auf die Patenterteilung: **17.07.2024**
(21) Anmeldenummer: 20714919.6
(22) Anmeldetag: 17.03.2020
(51) Int. Cl.: B23Q 11/00, G05B 19/401, G05B 19/404

(54) **VIBRATIONSDÄMPFUNG BEI EINER WERKZEUGMASCHINE MIT MEHRFACHER VIBRATIONSERFASSUNG**
DAMPING OF VIBRATIONS IN A MACHINE TOOL WITH MULTIPLE VIBRATION DETECTION
AMORTISSEMENT DES VIBRATIONS DANS UNE MACHINE-OUTIL À DÉTECTION MULTIPLE DES VIBRATIONS

(30) Priorität: 26.03.2019 EP 19165141
(43) Veröffentlichungstag der Anmeldung: 17.11.2021
(73) Patentinhaber: Siemens Aktiengesellschaft, 80333 München (DE)
(72) Erfinder: BRETSCHNEIDER, Jochen, 88696 Owingen (DE); LADRA, Uwe, 91056 Erlangen (DE); SCHÄFERS, Elmar, 90763 Fürth (DE); SCHÜR, Torsten, 91058 Erlangen (DE)
(74) Vertreter: Siemens Patent Attorneys
(86) Internationale Anmeldenummer: PCT/EP2020/057194
(87) Internationale Veröffentlichungsnummer: WO 2020/193265

(56) Entgegenhaltungen:
- EP-A1- 3 017 911
- EP-A1- 3 312 690
- US-A1- 2013 085 607
- US-B1- 6 296 093

## Beschreibung

Die vorliegende Erfindung geht aus von einer Werkzeugmaschine,
- wobei die Werkzeugmaschine eine Mehrzahl von Maschinenelementen aufweist,
- wobei die Maschinenelemente über Antriebe der Werkzeugmaschine relativ zueinander verfahrbar sind,
- wobei die Werkzeugmaschine eine Maschinensteuerung aufweist, welche Steuersignale für die Antriebe ermittelt und an die Antriebe ausgibt, um die Maschinenelemente der Werkzeugmaschine relativ zueinander lagegeregelt zu verfahren, so dass ein eine spanende Bearbeitung eines Werkstücks ausführendes Werkzeug relativ zu dem Werkstück lagegeregelt verfahren wird.

Bei Werkzeugmaschinen kann es bei der spanenden Bearbeitung von Werkstücken zu unerwünschten Vibrationen kommen. Ursache für derartige, in Fachkreisen als Rattern bezeichnete Vibrationen sind unzureichend gedämpfte Eigenfrequenzen der Werkzeugmaschine in Verbindung mit während der spanenden Bearbeitung auftretenden Prozesskräften. Um Rattern zu vermeiden, kann die Zerspanungsleistung verringert werden, beispielsweise durch Reduzieren der Schnitttiefe oder der Vorschubgeschwindigkeit. In Einzelfällen ist auch eine Verringerung der Spindeldrehzahl, mit welcher das Werkzeug rotiert wird, wirkungsvoll. Derartige Eingriffe in den Betrieb der Werkzeugmaschine führen in aller Regel zu einer Verringerung der Produktivität und sind daher unerwünscht. Im Stand der Technik wird daher häufig der Weg beschritten, Eigenfrequenzen der Maschine aktiv oder passiv zu dämpfen, um so die Zerspanungsleistung der Werkzeugmaschine nicht reduzieren zu müssen.

Zum Dämpfen der Eigenfrequenzen wird der entsprechende aktive oder passive Schwingungsdämpfer an einer geeigneten Stelle desjenigen Maschinenelements angeordnet, dessen Vibration gedämpft werden soll. Im Falle eines aktiven Schwingungsdämpfers wird in der Nähe des aktiven Schwingungsdämpfers auch ein Sensor angeordnet, mittels dessen die auftretende Vibration erfasst wird.

Ideal wäre es, den aktiven Schwingungsdämpfer direkt an der Stelle desjenigen Maschinenelements anzuordnen, an der die störende Schwingung auftritt. Dieser Ort ist oftmals jedoch nicht zugänglich oder nur derart beengt zugänglich, dass eine Anordnung des aktiven Schwingungsdämpfers an dieser Stelle nicht möglich ist. Der aktive Schwingungsdämpfer wird daher in der Regel an einer anderen, besser zugänglichen Stelle angeordnet. Die Wirksamkeit und Effizienz des aktiven Schwingungsdämpfers ist dadurch oftmals beschränkt. Der zugehörige Regelkreis, der das Ausgangssignal des genannten Sensors verwertet, ist jedoch strukturell stabil.

In einem günstigen Fall führt diese Vorgehensweise zu einer hinreichend guten Dämpfung der Vibration an der relevanten Stelle. Rattern tritt dann nicht mehr auf. Bei der Qualität der Oberfläche des Werkstücks wird die gewünschte Genauigkeit erreicht. In anderen Fällen verbleibt jedoch noch eine deutliche Vibration an der relevanten Stelle.

Um eine derartige, dennoch auftretende Vibration zu unterdrücken oder zu dämpfen, ist es möglich, die Verstärkung des zugehörigen Regelkreises zu erhöhen. Dies kann jedoch zu einer Instabilität des Regelkreises führen. Eine weitere Möglichkeit besteht darin, den Sensor nicht in der Nähe des aktiven Schwingungsdämpfers anzuordnen, sondern in demjenigen Bereich, in dem die störende Vibration auftritt. Auch diese Vorgehensweise birgt jedoch die Gefahr einer Instabilität des Regelkreises in sich. Mit einer geeigneten Vorverarbeitung des von dem Sensor erfassten Signals lässt sich jedoch auch hier eine stabile Regelung erreichen. Die Vorverarbeitung umfasst insbesondere eine Frequenzfilterung in einem entsprechend parametrierten Frequenzfilter. Soweit erforderlich, können zusätzlich dynamische Übertragungsglieder im Regelkreis vorhanden sein, welche Phasenverschiebungen ausgleichen.

Aus der Druckschrift US 6 296 093 B1 ist eine Werkzeugmaschine mit wenigstens einem aktiven Dämpfer bekannt, bei der durch entsprechende Sensoren Vibrationen an mehreren Stellen der Maschine erfasst werden. Die Ansteuerung des Vibrationsdämpfers erfolgt auf Basis der von den Sensoren erzeugten Sensorsignale.

Aus der Druckschrift EP 3 312 690 A1 ist ein Vibrationsdämpfungssystem für einen Maschinenkopf einer Werkzeugmaschine bekannt, bei dem durch mehrere Sensoren mehrere Sensorsignale an unterschiedlichen Stellen des Maschinenkopfes erzeugt und zur Berechnung einer Ansteuerungsfunktion für den Vibrationsdämpfer verwendet werden.

Aus der Druckschrift EP 3 017 911 B1 ist ein dynamisch stabiles Maschinenwerkzeug bekannt mit einer Ramme, die einen Maschinenkopf enthält, mehreren Sensoren zur Messung der Stärke von Vibrationen sowie mindestens zwei trägen Stellantrieben, wobei jeder Stellantrieb in Abhängigkeit der von den Sensoren erzeugten Sensorsignale eine Kraft in einer der Hauptbiegerichtungen der Ramme erzeugt.

Aus EP 2 574 820 A1 ist eine Bearbeitungsmaschine mit einem Achsantrieb bekannt, der von einer Steuereinrichtung entsprechend einer Sollverfahrbewegung ansteuerbar ist, wobei die Bearbeitungsmaschine eine mittels des Achsantriebs verfahrbare mechanische Struktur aufweist, auf der ein auf eine Ausgleichsmasse wirkender Ausgleichsantrieb angeordnet ist. Die Ausgleichsmasse ist in Abhängigkeit verschiedener Messgrößen mittels einer Steuereinrichtung relativ zu der mechanischen Struktur verfahrbar.

Die Aufgabe der vorliegenden Erfindung besteht darin, eine Möglichkeit zu schaffen, eine effiziente aktive Dämpfung einer unerwünschten Vibration mit einer stabilen Ausgestaltung des zugehörigen Regelkreises zu kombinieren.

Die Aufgabe wird durch eine Werkzeugmaschine mit den Merkmalen des Anspruchs 1 gelöst. Vorteilhafte Ausgestaltungen der Werkzeugmaschine sind Gegenstand der abhängigen Ansprüche 2 und 3.

Im Rahmen der vorliegenden Erfindung werden also die beiden Istwerte unabhängig voneinander mittels voneinander verschiedener Sensoren und damit unabhängig voneinander erfasst. Sie sind somit auch unabhängig voneinander in dem Sinne, dass nicht der eine Istwert aus dem anderen ohne weiteres abgeleitet werden kann, wie es beispielsweise bei einer Lageregelung mit einer unterlagerten Drehzahlregelung der Fall ist. In einem derartigen Fall korrespondiert beispielsweise die Änderung der Lage, das heißt die Änderung des einen Istwertes, automatisch mit der Drehzahl, d.h. dem anderen Istwert, so dass eine direkte Abhängigkeit der beiden Istwerte voneinander besteht.

Es ist möglich und in der Regel auch anzustreben, dass der erste Sollwert den Wert null aufweist. Alternativ ist es möglich, dass der erste Sollwert durch die Soll- oder Istwerte der Antriebe bestimmt ist, welche die Maschinenelemente lagegeregelt relativ zueinander verfahren. Beispielsweise kann der erste Sollwert einer momentanen Beschleunigung entsprechen, mit der das entsprechende Maschinenelement aufgrund der aktuellen Ansteuerung der Antriebe beaufschlagt werden soll. Analoge Ausführungen können für den zweiten Sollwert gelten. Vorzugsweise ist die resultierende Stellgröße des Doppelreglers eine Sollkraft. Dadurch ergibt sich eine besonders einfache Ansteuerung des aktiven Schwingungsdämpfers.

Eine Ausgestaltung besteht darin,
- dass der Doppelregler einen ersten Regler umfasst, dem der erste Sollwert und der erste erfasste Istwert zugeführt werden und der daraus eine erste Aufschaltgröße ermittelt,
- dass der Doppelregler einen zweiten Regler umfasst, dem der zweite Sollwert und der zweite erfasste Istwert sowie die erste Aufschaltgröße zugeführt werden und daraus eine vorläufige Stellgröße ermittelt,
- dass der Doppelregler einen Vorsteuerblock aufweist, dem der erste Sollwert und der erste erfasste Istwert zugeführt werden und der daraus eine zweite Aufschaltgröße ermittelt, und
- dass der Doppelregler die zweite Aufschaltgröße auf die vorläufige Stellgröße aufschaltet und so die resultierende Stellgröße ermittelt.

In diesem Fall wird eine kaskadierte Reglerstruktur aufgebaut, bei welcher im Rahmen einer Inbetriebnahme zuerst der zweite Regler parametriert werden kann, so dass er stabil ist, und sodann der zweite Regler und der Vorsteuerblock parametriert werden können, so dass der Doppelregler in seiner Gesamtheit stabil ist. Auch hier ist wieder eine Vorverarbeitung der beiden erfassten Istwerte möglich.

Diese Vorgehensweise kann auch umgekehrt dadurch realisiert werden,
- dass der Doppelregler einen ersten Regler umfasst, dem der erste Sollwert, der erste erfasste Istwert und eine erste Aufschaltgröße zugeführt werden und der daraus eine vorläufige Stellgröße ermittelt,
- dass der Doppelregler einen zweiten Regler umfasst, dem der zweite Sollwert und der zweite erfasste Istwert zugeführt werden und der daraus die erste Aufschaltgröße ermittelt,
- dass der Doppelregler einen Vorsteuerblock aufweist, dem der zweite Sollwert und der zweite erfasste Istwert zugeführt werden und der daraus eine zweite Aufschaltgröße ermittelt, und
- dass der Doppelregler die zweite Aufschaltgröße auf die vorläufige Stellgröße aufschaltet und so die resultierende Stellgröße ermittelt.

Auch hier ist wieder eine Vorverarbeitung der beiden erfassten Istwerte möglich.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine von der Seite,
- FIG 2: die Werkzeugmaschine von Figur 1 von vorne,
- FIG 3: eine steuerungstechnisches Darstellung einer Werkzeugmaschine,
- FIG 4: eine mögliche Ermittlung von Sollwerten und
- FIG 5 bis 6: mögliche Ausgestaltungen eines Doppelreglers.

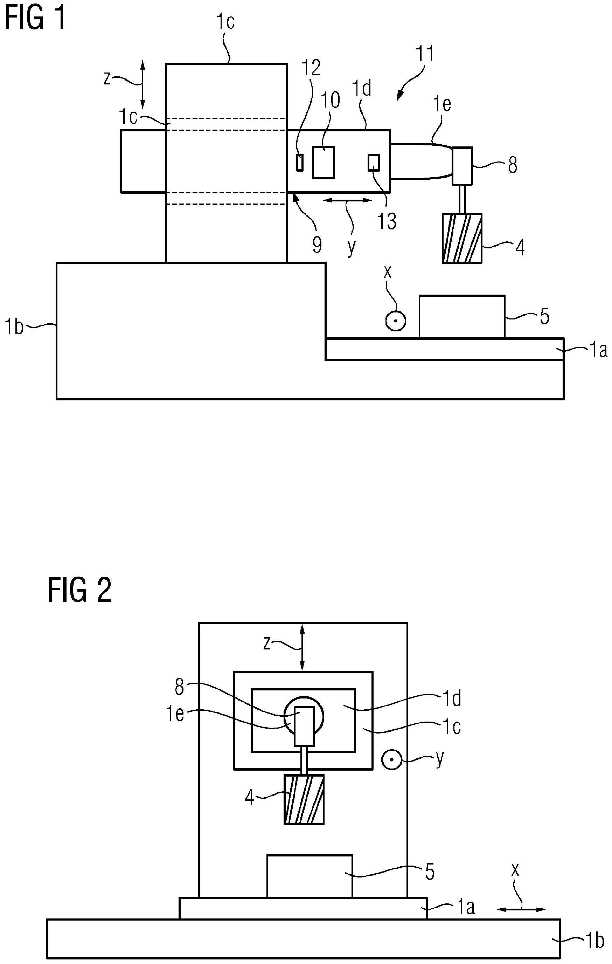

Gemäß den FIG 1 und 2 weist eine Werkzeugmaschine eine Mehrzahl von Maschinenelementen 1 auf. Die Bezugszeichen der Maschinenelemente 1 sind in den FIG 1 und 2 jeweils durch einen kleinen Buchstaben a bis e ergänzt, damit nachstehend bei Bedarf konkret auf ein ganz bestimmtes der Maschinenelemente 1 Bezug genommen werden kann.

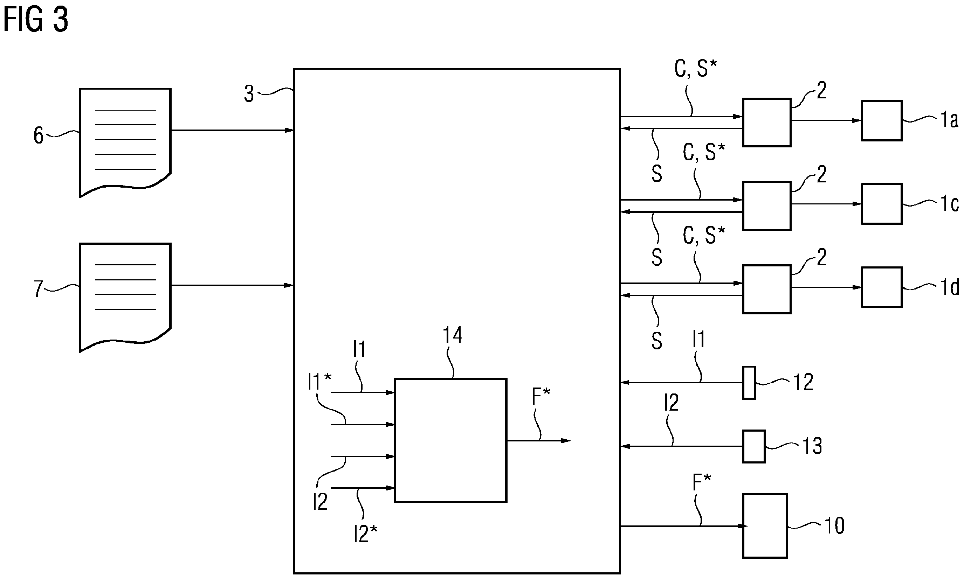

Die Maschinenelemente 1 sind über Antriebe 2 der Werkzeugmaschine relativ zueinander verfahrbar. Die Antriebe 2 werden zu diesem Zweck entsprechend der Darstellung in FIG 3 von einer Maschinensteuerung 3 angesteuert, welche für die Antriebe 2 die jeweiligen Steuersignale C bzw. die zugehörigen Sollwerte S* ermittelt und sie an die Antriebe 2 ausgibt. Aufgrund der entsprechenden Vorgabe der Steuersignale C bzw. der zugehörigen Sollwerte S* werden die Maschinenelemente 1 von der Maschinensteuerung 3 relativ zueinander lagegeregelt verfahren. Die zugehörigen Istwerte S werden von den Antrieben 2 an die Maschinensteuerung 3 zurückgemeldet. Die Verfahrbewegung bewirkt, dass ein Werkzeug 4 relativ zu einem Werkstück 5 lagegeregelt verfahren wird. Das Werkzeug 4 führt während der Verfahrbewegung zumindest zeitweise eine spanende Bearbeitung des Werkstücks 5 aus, beispielsweise ein Fräsen.

Die Maschinensteuerung 3 ist üblicherweise als numerische Steuerung (CNC) ausgebildet. Die Wirkungsweise der Maschinensteuerung 3 wird durch ein Systemprogramm 6 und ein Nutzprogramm 7 bestimmt. Das Systemprogramm 6 entspricht in der Regel dem NC-Kernel der numerischen Steuerung. Das Nutzprogramm 7 ist in der Regel ein sogenanntes Teileprogramm.

Die Ausgestaltung der Werkzeugmaschine und damit insbesondere auch die Ausgestaltung der Maschinenelemente 1 kann nach Bedarf sein. Die FIG 1 und 2 zeigen - rein beispielhaft - eine einfache Ausgestaltung. Bei dieser Ausgestaltung ist ein Werkstücktisch 1a vorhanden, auf dem das Werkstück 5 befestigt ist. Der Werkstücktisch 1a kann relativ zu einem Grundkörper 1b der Werkzeugmaschine in einer mit x bezeichneten horizontalen Richtung verfahren werden. Weiterhin kann bei dieser Ausgestaltung ein Führungsrahmen 1c vorhanden sein, der relativ zum Grundkörper 1b in einer mit z bezeichneten vertikalen Richtung verfahren werden kann. Weiterhin kann bei dieser Ausgestaltung in dem Führungsrahmen 1c ein Tragarm 1d in einer mit y bezeichneten weiteren horizontalen Richtung verfahren werden. Die weitere horizontale Richtung y ist in der Regel orthogonal zur zuvor genannten horizontalen Richtung x. Am Tragarm 1d kann ein Bearbeitungskopf 1e angeordnet sein, der eine Spindel 8 und das Werkzeug 4 trägt. Der Bearbeitungskopf 1e kann gegebenenfalls um eine oder zwei Achsen schwenkbar sein.

Die soeben erläuterte mechanisch-konstruktive Ausgestaltung der Werkzeugmaschine ist möglich, und es gibt auch derartige Realisierungen. Die vorliegende Erfindung ist aber nicht auf diese Ausgestaltung beschränkt.

Während der spanenden Bearbeitung des Werkstücks 5 durch das Werkzeug 4 können an verschiedenen Maschinenelementen 1 - beispielsweise am Tragarm 1d oder am Werkstücktisch 1a - unerwünschte Vibrationen auftreten. Nachstehend wird angenommen, dass eine Vibration am Tragarm 1d auftritt. Sie könnte aber auch an einem anderen der Maschinenelemente 1 auftreten. Soweit nachstehend auf das Maschinenelement 1 Bezug genommen wird, an dem die Vibration auftritt, wird daher das Bezugszeichen 1d verwendet. Dies dient jedoch nur Zwecken der Erläuterung und soll nicht beschränkend in dem Sinne zu verstehen sein, dass die Vibration an dem Tragarm 1d auftreten muss. Weiterhin wird das entsprechende Maschinenelement 1d nachfolgend als das betroffene Maschinenelement bezeichnet.

In einem ersten Bereich 9 des betroffenen Maschinenelements 1d ist mindestens ein aktiver Schwingungsdämpfer 10 angeordnet. Der aktive Schwingungsdämpfer 10 kann beispielsweise als Linearmotor ausgebildet sein. Der aktive Schwingungsdämpfer 10 dient der Dämpfung dieser Vibration. Die Vibration als solche tritt hingegen nicht im ersten Bereich 9, sondern in einem zweiten Bereich 11 des betroffenen Maschinenelements 1d auf.

Zur Erfassung der zu dämpfenden Vibration ist in der Nähe des aktiven Schwingungsdämpfers 10 und damit im ersten Bereich 9 des betroffenen Maschinenelements 1d ein erster Sensor 12 angeordnet. Weiterhin ist zur Erfassung der zu dämpfenden Vibration zusätzlich ein zweiter Sensor 13 vorhanden. Der zweite Sensor 13 kann an einem anderen Maschinenelement 1 angeordnet sein, beispielsweise am Bearbeitungskopf 1e. Er kann auch an dem betroffenen Maschinenelement 1d angeordnet sein. In diesem Fall ist der zweite Sensor 13 jedoch in einem vom ersten Bereich 9 verschiedenen anderen Bereich des betroffenen Maschinenelements 1d angeordnet. Insbesondere kann der zweite Sensor 13 in diesem Fall im zweiten Bereich 11 des betroffenen Maschinenelements 1d angeordnet sein. Unabhängig von der konkreten Anordnung des zweiten Sensors 13 ist der zweite Sensor 13 aber näher an der Stelle angeordnet, an welcher das Werkzeug 4 auf das Werkstück 5 einwirkt, als der erste Sensor 12. Entsprechend dem konkreten Beispiel kann der zweite Sensor 13 beispielsweise am Tragarm 1d in der Nähe des Bearbeitungskopfes 1e angeordnet sein oder am Bearbeitungskopf 1e selbst, nicht aber am Führungsrahmen 1c oder am Grundkörper 1b. Die Sensoren 12, 13 können beispielsweise als Beschleunigungssensoren ausgebildet sein.

Der aktive Schwingungsdämpfer 10 wird von einem Doppelregler 14 gesteuert. Ein Doppelregler 14 ist ein Regler, dem zwei Istwerte I1, I2 und zwei Sollwerte I1*, I2* zugeführt werden und der anhand aller vier ihm zugeführten Größen I1, I2, I1*, I2* eine resultierende Stellgröße F* ermittelt. Vorzugsweise ist der Doppelregler 14 in Software realisiert. Alternativ kann der Doppelregler 14 in Hardware realisiert sein.

Es ist entsprechend der Darstellung in FIG 3 möglich, dass der Doppelregler 14 Bestandteil der Maschinensteuerung 3 ist. Alternativ kann er eigenständig realisiert sein. Insbesondere sind den Antrieben 2 oftmals sogenannte control units (nicht dargestellt) zugeordnet, welche die von der Maschinensteuerung 3 abgegebenen Steuersignale C in die Ansteuerung von Stromrichtern (nicht dargestellt) umsetzen, welche ihrerseits die elektrischen Maschinen (nicht dargestellt) mit ihrem jeweiligen Betriebsstrom beaufschlagen, so dass die elektrischen Maschinen die Maschinenelemente 1 verfahren. Der Doppelregler 14 kann insbesondere in einer derartigen control unit implementiert sein. Da weiterhin eine control unit oftmals die Ansteuerung der Stromrichter von mehreren elektrischen Maschinen bewirken kann, kann es sich gegebenenfalls um dieselbe control unit handeln, welche auch die elektrischen Maschinen der Antriebe 2 mit ihrem jeweiligen Betriebsstrom beaufschlagt.

Dem Doppelregler 14 werden also ein erster Istwert I1 und ein zweiter Istwert I2 zugeführt. Der erste Istwert I1 wird mittels des ersten Sensors 12 erfasst, der zweite Istwert I2 mittels des zweiten Sensors 13. Weiterhin werden dem Doppelregler 14 ein erster Sollwert I1* und ein zweiter Sollwert I2* zugeführt. Der Doppelregler 14 ermittelt anhand des erfassten ersten und des erfassten zweiten Istwertes I1, I2 und des ersten und des zweiten Sollwertes I1*, I2* eine resultierende Stellgröße F* für den aktiven Schwingungsdämpfer 10. Auch steuert der Doppelregler 14 den aktiven Schwingungsdämpfer 10 entsprechend der ermittelten resultierenden Stellgröße F* an. Die resultierende Stellgröße F* kann beispielsweise eine Sollkraft sein. Dies gilt sowohl für die prinzipielle Ausgestaltung gemäß FIG 3 als auch für die nachstehend erläuterten möglichen Ausgestaltungen dieses Prinzips.

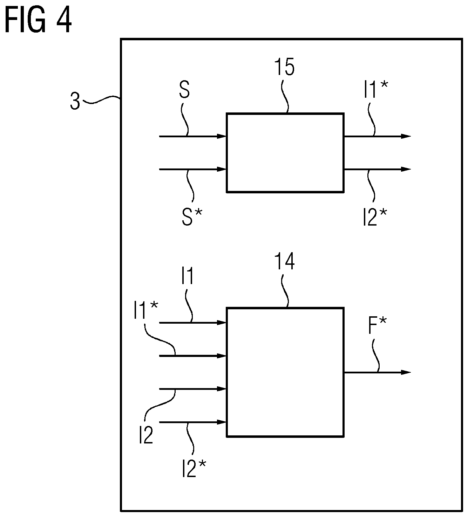

Im Rahmen der Ausgestaltung gemäß FIG 3 weisen der erste Sollwert I1* und der zweite Sollwert I2* den Wert null auf. Dies ist jedoch nicht zwingend. Es ist vielmehr alternativ möglich, dass der erste Sollwert I1* entsprechend der Darstellung in FIG 4 einen Wert aufweist, der durch die Soll- oder Istwerte S*, S der Antriebe 2 bestimmt ist, welche die Maschinenelemente 1 lagegeregelt relativ zueinander verfahren. Beispielsweise kann die Maschinensteuerung 3 einen Ermittlungsblock 15 aufweisen, der anhand der Soll- oder Istwerte S*, S eine erwartete momentane Beschleunigung des betroffenen Maschinenelements 1d im ersten Bereich 9 ermittelt und diesen Wert dem Doppelregler 14 als ersten Sollwert I1* vorgibt. In analoger Weise kann der Ermittlungsblock 15 entsprechend der Darstellung in FIG 4 auch den zweiten Sollwert I2* ermitteln. Insbesondere kann auch der zweite Sollwert I2* einen Wert aufweisen, der durch die Soll- oder Istwerte S*, S der Antriebe 2 bestimmt ist, welche die Maschinenelemente 1 lagegeregelt relativ zueinander verfahren. Beispielsweise kann der Ermittlungsblock 15 anhand der Soll- oder Istwerte S*, S eine erwartete momentane Beschleunigung des Ortes ermitteln, an dem der zweite Sensor 13 angeordnet ist, und dem Doppelregler 14 diesen Wert als zweiten Sollwert I2* vorgeben.

Wenn der erste Sollwert I1* von der Maschinensteuerung 3 dynamisch ermittelt wird, wird in der Regel auch der zweite Sollwert I2* von der Maschinensteuerung 3 dynamisch ermittelt. Es ist aber auch möglich, dass nur einer der beiden Sollwerte I1*, I2* von der Maschinensteuerung 3 dynamisch ermittelt wird, während der andere der beiden Sollwerte I1*, I2* statisch den Wert null aufweist.

Nachfolgend werden in Verbindung mit den weiteren FIG mögliche Ausgestaltungen des Doppelreglers 14 erläutert. In allen Ausgestaltungen umfasst der Doppelregler 14 einen ersten Regler 16 und einen zweiten Regler 17.

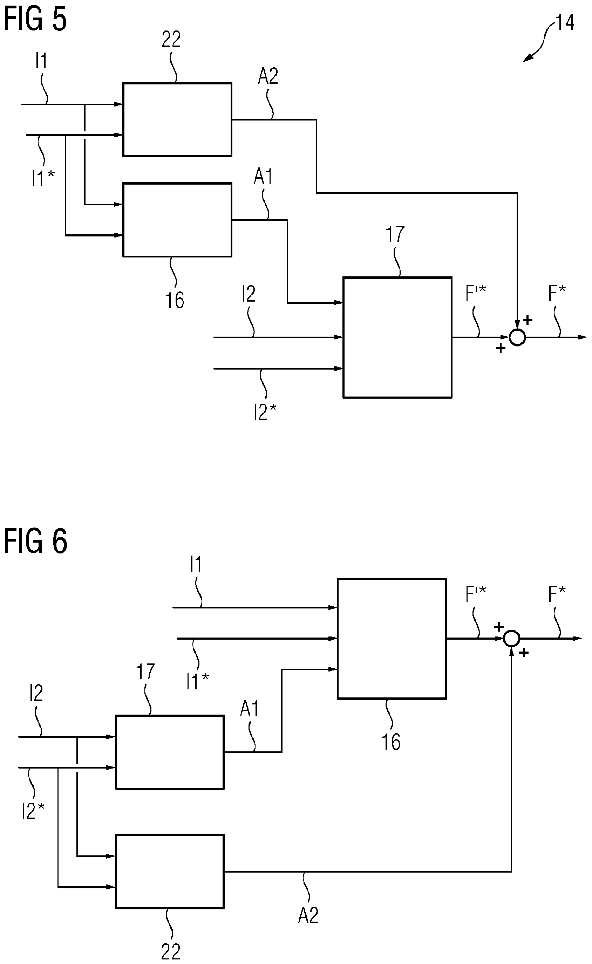

Im Rahmen der Ausgestaltung gemäß FIG 5 werden dem ersten Regler 16 der erste Sollwert I1* und der erste erfasste Istwert I1 zugeführt. Der erste Regler 16 ermittelt daraus eine erste Aufschaltgröße A1. Der erste Regler 16 kann zu diesem Zweck eine entsprechende interne Übertragungsfunktion aufweisen. Dem zweiten Regler 17 werden der zweite Sollwert I2* und der zweite erfasste Istwert I2 sowie zusätzlich die erste Aufschaltgröße A1 zugeführt. Der zweite Regler 17 ermittelt daraus eine vorläufige Stellgröße F'*. Der Doppelregler 14 weist weiterhin einen Vorsteuerblock 22 auf. Dem Vorsteuerblock 22 werden der erste Sollwert I1* und der erste erfasste Istwert I1 zugeführt, insbesondere deren Differenz. Der Vorsteuerblock 22 ermittelt daraus eine zweite Aufschaltgröße A2. Der Doppelregler 14 schaltet die zweite Aufschaltgröße A2 auf die vorläufige Stellgröße F'* auf. Die so ermittelte Summe dieser beiden Größen A2, F'* entspricht der resultierenden Stellgröße F*.

Im Rahmen der Ausgestaltung gemäß FIG 6 wird eine völlig analoge Vorgehensweise ergriffen. Der Unterschied ist nur, dass der erste und der zweite Regler 16, 17 ihre Rollen tauschen. Im Rahmen der Ausgestaltung gemäß FIG 6 werden also dem ersten Regler 16 der erste Sollwert I1*, der erste erfasste Istwert I1 und eine erste Aufschaltgröße A1 zugeführt. Der erste Regler 16 ermittelt daraus eine vorläufige Stellgröße F'*. Dem zweiten Regler 17 werden der zweite Sollwert I2* und der zweite erfasste Istwert I2 zugeführt. Der zweite Regler 17 ermittelt daraus die erste Aufschaltgröße A1. Auch bei der Ausgestaltung gemäß FIG 6 weist der Doppelregler 14 einen Vorsteuerblock 22 auf. Dem Vorsteuerblock 22 werden der zweite Sollwert I2* und der zweite erfasste Istwert I2 zugeführt, insbesondere deren Differenz. Der Vorsteuerblock 22 ermittelt daraus eine zweite Aufschaltgröße A2. Der Doppelregler 14 schaltet die zweite Aufschaltgröße A2 auf die vorläufige Stellgröße F'* auf. Die so ermittelte Summe dieser beiden Größen A2, F'* entspricht der resultierenden Stellgröße F*.

Zusammengefasst betrifft die vorliegende Erfindung somit folgenden Sachverhalt:
Maschinenelemente 1 einer Werkzeugmaschine sind über Antriebe 2 relativ zueinander verfahrbar. Eine Maschinensteuerung 3 der Werkzeugmaschine ermittelt Steuersignale C für die Antriebe 2 und gibt sie an die Antriebe 2 aus. Dadurch wird ein eine spanende Bearbeitung eines Werkstücks 5 ausführendes Werkzeug 4 relativ zu dem Werkstück 5 lagegeregelt verfahren. In einem ersten Bereich 9 eines Maschinenelements 1d ist zur Dämpfung einer Vibration, die während der spanenden Bearbeitung des Werkstücks 5 durch das Werkzeug 4 in einem zweiten Bereich 11 dieses Maschinenelements 1d auftritt, mindestens ein aktiver Schwingungsdämpfer 10 angeordnet. Zur Erfassung der Vibration ist zumindest im ersten Bereich 9 dieses Maschinenelements 1d ein erster Sensor 12 angeordnet, an einem anderen Maschinenelement 1e oder in einem anderen Bereich dieses Maschinenelements 1d ein zweiter Sensor 13. Einem Doppelregler 14 werden mittels des ersten und des zweiten Sensors 12, 13 erfasste Istwerte I1, I2 sowie entsprechende Sollwerte I1*, I2* zugeführt. Der Doppelregler 14 ermittelt anhand dieser Werte I1, 12, I1*, I2* eine resultierende Stellgröße F* für den aktiven Schwingungsdämpfer 10 und steuert den aktiven Schwingungsdämpfer 10 entsprechend an.

Die vorliegende Erfindung weist viele Vorteile auf. Aufgrund Anordnung des ersten Sensors 12 in der Nähe des aktiven Schwingungsdämpfers 10 und damit der Erfassung des ersten Istwertes I1 in der Nähe des aktiven Schwingungsdämpfers 10 ist ohne weiteres eine stabile Regelung realisierbar, welche durch die Ergänzung durch den zweiten Istwert I2 auf einfache Weise verbesserbar ist. Der zweite Sensor 13 kann an beliebiger geeigneter Stelle angeordnet werden, insbesondere in der Nähe des TCP (= tool center point). Weiterhin kann durch eine geeignete Signalverarbeitung der erfassten Istwerte I1, I2 - beispielsweise eine lineare Mischung der erfassten Istwerte I1, I2 - ein virtueller Sensor an einer nicht direkt zugänglichen Stelle simuliert werden. Auch kann die Wirkung des aktiven Schwingungsdämpfers 10 optimiert werden. Weiterhin kann der Doppelregler 14 auf einfache Weise stabil gehalten werden, so dass er also nicht seinerseits eine instabile Ansteuerung des aktiven Schwingungsdämpfers 10 bewirkt.

Die vorliegende Erfindung wurde obenstehend in Verbindung mit einem einzelnen aktiven Schwingungsdämpfer 10 erläutert, der an einem einzigen Maschinenelement 1 - hier dem Maschinenelement 1d - angeordnet ist. Es ist aber auch möglich, an einem einzelnen Maschinenelement 1 mehrere aktive Schwingungsdämpfer 10 anzuordnen. Auch ist es möglich, an mehreren Maschinenelementen 1 jeweils einen oder mehrere aktive Schwingungsdämpfer 10 anzuordnen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Werkzeugmaschine,
- wobei die Werkzeugmaschine eine Mehrzahl von Maschinenelementen (1) aufweist,
- wobei die Maschinenelemente (1) über Antriebe (2) der Werkzeugmaschine relativ zueinander verfahrbar sind,
- wobei die Werkzeugmaschine eine Maschinensteuerung (3) aufweist, welche Steuersignale (C) für die Antriebe (2) ermittelt und an die Antriebe (2) ausgibt, um die Maschinenelemente (1) der Werkzeugmaschine relativ zueinander lagegeregelt zu verfahren, so dass ein eine spanende Bearbeitung eines Werkstücks (5) ausführendes Werkzeug (4) relativ zu dem Werkstück (5) lagegeregelt verfahren wird,
- wobei in einem ersten Bereich (9) eines der Maschinenelemente (1d) zur Dämpfung einer während der spanenden Bearbeitung des Werkstücks (5) durch das Werkzeug (4) in einem zweiten Bereich (11) dieses Maschinenelements (1d) auftretenden Vibration mindestens ein aktiver Schwingungsdämpfer (10) angeordnet ist,
- wobei zur Erfassung der zu dämpfenden Vibration zumindest im ersten Bereich (9) dieses Maschinenelements (1d) ein erster Sensor (12) angeordnet ist und an einem anderen Maschinenelement (1e) oder in einem anderen Bereich dieses Maschinenelements (1d), insbesondere im zweiten Bereich (11) dieses Maschinenelements (1d), ein zweiter Sensor (13) angeordnet ist,
- wobei einem Doppelregler (14) ein mittels des ersten Sensors (12) erfasster erster Istwert (I1) und ein mittels des zweiten Sensors (13) erfasster zweiter Istwert (I2) sowie ein erster und ein zweiter Sollwert (I1*, I2*) zugeführt werden,
- wobei der Doppelregler (14) anhand des erfassten ersten und des erfassten zweiten Istwertes (I1, I2) und des ersten und des zweiten Sollwertes (I1*, I2*) eine resultierende Stellgröße (F*) für den aktiven Schwingungsdämpfer (10) ermittelt und den aktiven Schwingungsdämpfer (10) entsprechend ansteuert, **dadurch gekennzeichnet dass**:
- der Doppelregler (14) einen ersten Regler (16) umfasst, dem der erste Sollwert (I1*) und der erste erfasste Istwert (I1) zugeführt werden und der daraus eine erste Aufschaltgröße (A1) ermittelt, und
- wobei der Doppelregler (14) einen zweiten Regler (17) umfasst, dem der zweite Sollwert (I2*) und der zweite erfasste Istwert (I2) sowie die erste Aufschaltgröße (A1) zugeführt werden und daraus eine vorläufige Stellgröße (F'*) ermittelt,
- dass der Doppelregler (14) einen Vorsteuerblock (22) aufweist, dem der erste Sollwert (11* ) und der erste erfasste Istwert (11) zugeführt werden und der daraus eine zweite Aufschaltgröße (A2) ermittelt, und- dass der Doppelregler (14) die zweite Aufschaltgröße (A2) auf die vorläufige Stellgröße (F'* ) aufschaltet und so die resultierende Stellgröße (F* ) ermittelt.

2. Werkzeugmaschine nach Anspruch 1,
**dadurch gekennzeichnet,**
- **dass** der erste Sollwert (I1*) den Wert null aufweist oder einen Wert aufweist, der durch die Soll- oder Istwerte (S*, S) der Antriebe (2) bestimmt ist, welche die Maschinenelemente (1) lagegeregelt relativ zueinander verfahren und/oder
- **dass** der zweite Sollwert (I2*) den Wert null aufweist oder einen Wert aufweist, der durch die Soll- oder Istwerte (S*, S) der Antriebe (2) bestimmt ist, welche die Maschinenelemente (1) lagegeregelt relativ zueinander verfahren.

3. Werkzeugmaschine nach Anspruch 1 oder 2,
**dadurch gekennzeichnet,**
**dass** die resultierende Stellgröße (F*) des Doppelreglers (14) eine Sollkraft ist.

## Claims

1. Machine tool,
- wherein the machine tool has a plurality of machine elements (1),
- wherein the machine elements (1) can be moved relative to one another via drives (2) of the machine tool,
- wherein the machine tool has a machine control unit (3) which identifies control signals (C) for the drives (2) and outputs them to the drives (2) in order to move the machine elements (1) of the machine tool relative to one another in a position-controlled manner, such that a tool (4) which machines a workpiece (5) is moved relative to the workpiece (5) in a position-controlled manner,
- wherein at least one active vibration damper (10) is arranged in a first region (9) of one of the machine elements (1d) in order to damp a vibration occurring during the machining of the workpiece (5) by the tool (4) in a second region (11) of said machine element (1d),
- wherein a first sensor (12) is arranged in order to detect the vibration to be damped at least in the first region (9) of said machine element (1d) and a second sensor (13) is arranged on another machine element (1e) or in another region of said machine element (1d), in particular in the second region (11) of said machine element (1d),
- wherein a first actual value (I1) detected by means of the first sensor (12) and a second actual value (I2) detected by means of the second sensor (13) as well as a first and a second target value (I1*, I2*) are supplied to a dual controller (14),
- wherein the dual controller (14) identifies a resulting manipulated variable (F*) for the active vibration damper (10) on the basis of the detected first and the detected second actual value (I1, I2) and of the first and the second target value (I1*, I2*) and correspondingly activates the active vibration damper (10), **characterised in that**
- the dual controller (14) comprises a first controller (16) to which the first target value (I1*) and the first detected actual value (I1) are supplied and which identifies a first connection variable (A1) therefrom, and
- wherein the dual controller (14) comprises a second controller (17) to which the second target value (I2*) and the second detected actual value (I2) as well as the first connection variable (A1) are supplied and which identifies the resulting manipulated variable (F*) therefrom,
- that the dual controller (14) has a pilot-control block (22) to which the first target value (I1*) and the first detected actual value (I1) are supplied and which identifies a second connection variable (A2) therefrom, and that the dual controller (14) connects the second connection variable (A2) to the provisional manipulated variable (F'*) and in this way identifies the resulting manipulated variable (F*).

2. Machine tool according to claim 1,
**characterised in that**
- the first target value (I1*) has the value zero or has a value which is determined by the target or actual values (S*, S) of the drives (2) which move the machine elements (1) relative to one another in a position-controlled manner and/or
- the second target value (I2*) has the value zero or has a value which is determined by the target or actual values (S*, S) of the drives (2) which move the machine elements (1) relative to one another in a position-controlled manner.

3. Machine tool according to claim 1 or 2,
**characterised in that**
the resulting manipulated variable (F*) of the dual controller (14) is a target force.

## Revendications

1. Machine-outil,
- la machine-outil comportant une pluralité d'éléments (1) de machine,
- les éléments (1) de machine pouvant être déplacés les uns par rapport aux autres par l'intermédiaire d'entraînements (2) de la machine-outil,
- la machine-outil comportant une commande (3) de machine, qui détermine des signaux (C) de commande pour les entraînements (2) et les envoie aux entraînements (2) pour déplacer les éléments (1) de la machine-outil d'une manière réglée en position les uns par rapport aux autres, de sorte qu'un outil (4) effectuant un usinage avec enlèvement de copeaux d'une pièce (5) est déplacé d'une manière réglée en position par rapport à la pièce (5),
- au moins un amortisseur (10) actif de vibrations étant disposé dans une première partie (9) de l'un des éléments (1d) de la machine pour amortir une vibration se produisant dans une deuxième partie (11) de cet élément (1d) de la machine pendant l'usinage de la pièce (5) par l'outil (4),
- un premier capteur (12) étant monté au moins sur la première partie (9) de cet élément (1d) de la machine pour détecter la vibration à amortir et un deuxième capteur (13) étant monté sur un autre élément (1e) de la machine ou dans une autre partie de cet élément (1d) de la machine, notamment dans la deuxième partie (11) de cet élément (1d) de machine,
- une première valeur (I1) réelle détectée au moyen du premier capteur (12) et une deuxième valeur (I2) réelle détectée au moyen du deuxième capteur (13) ainsi qu'une première et une deuxième valeur (I1*, I2*) de consigne étant envoyées à un régulateur double (14),
- le double régulateur (14) déterminant, sur la base de la première et de la deuxième valeur (I1, I2) réelle détectées et de la première et de la deuxième valeur (I1*, I2*) de consigne, une grandeur (F*) de régulation résultante de l'amortisseur (10) actif de vibrations et commandant l'amortisseur (10) actif de vibrations en conséquence, **caractérisée en ce que** :
- le double régulateur (14) comporte un premier régulateur (16) auquel sont envoyées la première valeur (I1*) de consigne et la première valeur (I1) réelle détectée et qui détermine sur la base de celles-ci une première grandeur (A1) d'activation, et
- le double régulateur (14) comportant un deuxième régulateur (17) auquel sont envoyées la deuxième valeur (I2*) de consigne et la deuxième valeur (I2) réelle détectée ainsi que la première grandeur (Al) d'activation et qui détermine sur la base de celles-ci une grandeur (F'*) de régulation provisoire,
- **en ce que** le régulateur double (14) comporte un bloc (22) pilote, qui reçoit la première valeur (I1*) de consigne et la première valeur (I1) réelle détectée et qui détermine sur la base de celles-ci une deuxième grandeur (A2) d'activation, et **en ce que** le régulateur double (14) applique la deuxième grandeur (A2) d'activation à la grandeur (F'*) de régulation provisoire et détermine ainsi la grandeur (F*) de régulation résultante.

2. Machine-outil suivant la revendication 1,
**caractérisée**
- **en ce que** la première valeur (I1*) de consigne comporte la valeur zéro ou comporte une valeur qui est déterminée par les valeurs de consigne ou les valeurs réelles (S*, S) des entraînements (2) qui déplacent les éléments (1) de la machine les uns par rapport aux autres d'une manière réglée en position et/ou
- **en ce que** la deuxième valeur (I2*) de consigne comporte la valeur zéro ou comporte une valeur qui est déterminée par les valeurs de consigne ou les valeurs réelles (S*, S) des entraînements (2) qui déplacent les éléments (1) de la machine les uns par rapport aux autres d'une manière réglée en position.

3. Machine-outil suivant la revendication 1 ou 2,
**caractérisée**
**en ce que** la grandeur (F*) de régulation résultante du double régulateur (14) est une force de consigne.
